# EUROPEAN PATENT APPLICATION

(11) **EP 3 629 245 A1**
(43) Date of publication of application: **01.04.2020**
(21) Application number: 18197624.2
(22) Date of filing: 28.09.2018
(51) Int. Cl.: G06N 3/00, G06N 20/00, G06F 8/36, G06F 8/71, G06F 9/445

(54) **INTELLIGENT AGENT FRAMEWORK**

(71) Applicant: Koninklijke Philips N.V., 5656 AG Eindhoven (NL)
(72) Inventor: LASCHET, Cliff Johannes Robert Hubertina, 5656 AE Eindhoven (NL); BERGEVOET, Bas Arnold Jan, 5656 AE Eindhoven (NL); VAN SWEEVELT, Jan Albert, 5656 AE Eindhoven (NL)
(74) Representative: de Haan, Poul Erik

(57) **Abstract**

A software framework is provided for building a software-based intelligent agent. A configuration file may be written in the format of a configuration language to specify how an agent is constructed, for example by specifying a set of configuration elements and their parameters. To build the intelligent agent, the configuration file maybe parsed to create an internal representation of how the agent is structured. This internal representation may be used by an agent builder to create a functional intelligent agent, e.g. one that is executable on a particular target platform. The built intelligent agent may allow its state to be retrieved, for example by the intelligent agent being capable of autonomously outputting a state file. The configuration file together with the description of the intelligent agent's state may allow a 'stateful' copy of the intelligent agent to be created.

## Description

### FIELD OF THE INVENTION

The invention relates to software-based intelligent agents from the field of artificial intelligence, and to a system and a computer-implemented method for building a software-based intelligent agent. The invention further relates to the intelligent agent and to a software framework for building the intelligent agent.

### BACKGROUND OF THE INVENTION

Intelligent Agents (IA) are an increasingly popular paradigm in the field of Artificial Intelligence (AI) for creating self-learning and adaptive software, to solve complex problems and to create highly personalized solutions. Intelligent agents may be defined as being autonomous entities that observe and act in an environment in order to reach a certain goal (Norvig & Russel, 2010). An intelligent agent may observe by measuring its environment using one or more sensors. The agent may reason about these observations using a combination of reasoning techniques to decide which action(s) to perform. The chosen actions may be performed in the environment by using the agent's actuators. The actions may aim to change the environment in such a way that one or more goals may be achieved over time. The goal may be implicitly expressed by a reward function, which may indicate to what degree an action led to a beneficial change in the environment.

An example of an intelligent agent may be a software component of a 'self-driving' car enabling autonomous driving. The environment (e.g. the road, traffic participants, traffic signs, weather conditions, et cetera) may be measured using several sensors. The software component may reason about these measurements and effect actions, such as steering, breaking and accelerating in order to safely and efficiently travel to its destination. Other examples of intelligent agents are the voice assistants of Google and Amazon and Boston Dynamics' robotics for military applications. Intelligent agents have been a popular research topic in the academic world of AI for the past few years, leading to major breakthroughs in the field, such as the AlphaGo match in 2016. Intelligent agents are also applied in health-related areas, such as sleep, biofeedback and engagement.

A major advantage of intelligent agents may be that they may learn on the go, meaning that they may start solving a problem without requiring any prior data. This may also entail that they may adapt their behavior to specific scenarios (e.g. desired driving style for a specific user of an autonomous car). Furthermore, the concept of a goal may allow for a description of the desired environment's state (e.g. a reward function), which may be especially helpful when the way of achieving that state is complex to describe (e.g. safe and efficient driving). More generally speaking, intelligent agents may excel in areas where the problem's state space is too large to program the solution(s) with traditional software programming techniques.

Intelligent agents may internally use one or more machine learning algorithms to help reason about the observations of the environment, but they are not limited to using just this technology. Moreover, intelligent agents may provide additional functionalities compared to regular machine learning. Most importantly, intelligent agents may continuously adapt their behavior while interacting with the environment to reach the optimal reward, whereas machine learning algorithms maintain their trained behavior, regardless of changes in the environment.

Implementing an intelligent agent may require significant effort in AI design, software engineering and software architecting. AI experts typically improve the agent by iterating on specific combinations of reasoning techniques and corresponding hyperparameters (e.g. configurable parameters to tune the performance of the reasoning components). Each agent iteration is typically rigorously simulated, tested and evaluated. Software engineers may translate the selected reasoning techniques and hyperparameters to functional software. They may implement the reasoning techniques or re-use those offered in AI stacks, connect the sensor inputs to the agent and provide the agent's decisions as outputs to the actuators. Finally, because intelligent agents are often in need of immense computing power and are provided to many users, the infrastructural design required for deploying these agents may be a deliberate process with many moving parts.

All in all, developing intelligent agents may be a complex and lengthy process which often results in an expensive and convoluted implementation.

Intelligent agent programming languages may help in developing intelligent agents and are investigated in academic AI research (Franchi, 2012; Sredojevic, Vidakovic, Ivanovic, & Mitrovic, 2017; Demirkol, Challenger, Getir, & Kosar, 2013). These programming languages are typically made to either support a specific technology (e.g. multi-agent systems, second order logics, BDI agents) or a specific application domain (e.g. social network modelling, semantic web).

### References

Demirkol, S., Challenger, M., Getir, S., & Kosar, T. (2013). A DSL for the Development of Software Agents working within a Semantic Web Environment. Computer Science and Information Systems 10, 1525-1556.

Franchi, E. (2012). A Domain Specific Language Approach for Agent-Based Social Network Modeling . Advances in Social Networks Analysis and Mining (ASONAM), 2012 IEEE/ACM International Conference on, 607-612.

Norvig, P., & Russel, S. J. (2010). Artificial Intelligence: A Modern Approach. Prentice Hall. Sredojevic, D., Vidakovic, M., Ivanovic, M., & Mitrovic, D. (2017). Extension of Agent-oriented Domain-specific language ALAS as a support to Distributed Non-Axiomatic Reasoning. ICIST Proceedings, 368-372.

### SUMMARY OF THE INVENTION

A disadvantage of developing an intelligent agent, even with the help of an intelligent agent programming language, is that the intelligent agent is difficult to adapt or transfer after deployment, e.g. to another target platform. Here, 'adapt' may refer to modification of an intelligent agent itself, e.g., reasoning components, sensors, actuators, goal functions, etc., and not to the inherent adaptiveness of the intelligent agent, e.g., learning to optimize action selection over time, etc.

It would be desirable to address the abovementioned disadvantage of developing a software-based intelligent agent.

The following aspects of the invention may involve the use of an intelligent agent configuration language (IACL). The IACL may provide a controlled specification of how an intelligent agent is constructed, namely by defining configuration elements which each specify a part of a structure of the intelligent agent using one or more parameters which are at least in part user-definable. A configuration file may be written in the format of the IACL to specify how an agent is (to be) constructed, for example by specifying a set of configuration elements and their parameters. In some cases, the parameters may themselves have user-definable values, which may be specified by the configuration file. To build the intelligent agent, the configuration file may be parsed to create a data representation of how the intelligent agent is structured, while the data representation may be created to be readable by an agent builder. The data representation may subsequently be used by the agent builder to create a functional intelligent agent, e.g. one that is executable on a particular target platform.

Each functional intelligent agent, if created in this manner, may allow its state to be retrieved, for example by the intelligent agent being capable of autonomously outputting a state file. This state file may, for example, be expressed in a manner conforming to the IACL, and may specify the internal state of the intelligent agent and thereby reflect its obtained knowledge of the environment. Such knowledge may include the learnings of the agent so far, such as the effect of actions on the environment, the delay of observing the effect of actions in the environment, etc. The IACL is sufficiently eloquent to express the state of an existing agent. This eloquence is the direct result of a non-trivial design and engineering effort in which the IACL strikes an optimal balance between 1) maximizing the range of supported AI technologies (and their corresponding state) 2) minimizing the verbosity of the IACL and 3) maximizing the level of detail in which state can be expressed. Essentially, by having the configuration file from which the intelligent agent was created, and by having the state of the intelligent agent, both expressed using the IACL, the intelligent agent may be reconstructed (copied) while maintaining its state (e.g. obtained knowledge of the environment). The thus obtained copy may represent a 'stateful' copy of the original intelligent agent.

Moreover, the state file may allow the reasoning of the intelligent agent to be explained, e.g. for legislative or development purposes.

In accordance with a first aspect of the invention, a system is provided for building a software-based intelligent agent. The system comprises: a data interface for accessing:
- a configuration file defining a configuration of an intelligent agent in accordance with an intelligent agent configuration language,
   wherein the intelligent agent configuration language defines configuration elements which each specify a part of a structure of the intelligent agent using one or more parameters which are at least in part user-definable,
   wherein the configuration file specifies a set of configuration elements and their parameters in accordance with the intelligent agent configuration language;
a storage comprising a software framework for building the software-based intelligent agent, the software framework comprising:
- a parse component for parsing the configuration file and creating a data representation of a structure of the intelligent agent on the basis of the set of configuration elements and their parameters;
- a build component for building the software-based intelligent agent by i) accessing software libraries providing building blocks for the intelligent agent, and ii) based on the data presentation provided by the parse component, selecting a set of building blocks and setting their parameter values so as to establish the structure of the intelligent agent;
a processor subsystem for communicating with the data interface and the storage and for executing the software framework to build the intelligent agent based on the configuration file, wherein the intelligent agent allows a state of the intelligent agent to be obtained from the intelligent agent after deployment.

In accordance with a further aspect of the invention, a computer-readable medium is provided comprising transitory or non-transitory data representing a software framework as described with the system.

In accordance with a further aspect of the invention, a computer-readable medium is provided comprising transitory or non-transitory data representing an intelligent agent as built by the system, wherein the intelligent agent allows a state of the intelligent agent to be obtained from the intelligent agent after deployment.

In accordance with a further aspect of the invention, a computer-readable medium is provided comprising transitory or non-transitory data representing at least one of:
- a configuration file defining a configuration of an intelligent agent in accordance with an intelligent agent configuration language,
   the intelligent agent configuration language defining configuration elements which each specify a part of a structure of the intelligent agent using one or more parameters which are at least in part user-definable, and
   the configuration file specifying a set of configuration elements and their parameters in accordance with the intelligent agent configuration language;
- a state file comprising a state of the intelligent agent; and
- a state file comprising the configuration of the intelligent agent as the set of configuration elements and their parameters in accordance with the intelligent agent configuration language and the state of the intelligent agent.

In accordance with a further aspect of the invention, a computer-readable medium is provided comprising transitory or non-transitory data representing a specification of an intelligent agent configuration language, wherein the intelligent agent configuration language defines configuration elements which each specify a part of a structure of an intelligent agent using one or more parameters which are at least in part user-definable. In accordance with a further aspect of the invention, a computer-implemented method is provided for building a software-based intelligent agent. The method comprises:
- accessing a configuration file defining a configuration of an intelligent agent in accordance with an intelligent agent configuration language,
   wherein the intelligent agent configuration language defines configuration elements which each specify a part of a structure of the intelligent agent using one or more parameters which are at least in part user-definable,
   wherein the configuration file specifies a set of configuration elements and their parameters in accordance with the intelligent agent configuration language;
- parsing the configuration file and creating a data representation of a structure of the intelligent agent on the basis of the set of configuration elements and their parameters;
- building the software-based intelligent agent by:
   - accessing software libraries providing building blocks for the intelligent agent, and
   - based on the data presentation provided by the parsing, selecting a set of building blocks and setting their parameter values so as to establish the structure of the intelligent agent;
      wherein the intelligent agent allows a state of the intelligent agent to be obtained from the intelligent agent after deployment.

The above aspects of the invention relate to the following. An intelligent agent configuration language (IACL) is provided which allows specifying how an intelligent agent is to be constructed. Namely, the intelligent agent configuration language may define configuration elements which each specify a part of a structure of the intelligent agent using one or more parameters which are at least in part user-definable. These configuration elements may allow a specification of the intelligent agent at a higher abstraction level than in other generic AI frameworks.

For building the intelligent agent on the basis of the configuration file, re-usable software building blocks may be used, which may be provided by a set of software libraries. Each software library may contain one or more building blocks. The collective of software libraries contains all of the building blocks providing the AI technologies supported by the system as described herein. Optionally, a building block may also be provided by a third party external to the described system. An example of such an external building block is a cloud machine learning service (e.g. SageMaker provided by Amazon Web Services). From these software libraries, a set of building blocks may be selected and values of their parameters may be set so as to establish the desired structure of the intelligent agent. This may allow the realization of a wide variety of concepts using the IACL. A particular building block may be selected based on a configuration element. The building block may be generic and use-case agnostic. Parameter values of the building block may be set based on the user-definable parameters of the configuration elements. By doing so, the selected building block may be made use-case specific.

This specification may refer to the collective of the IACL specification, the building blocks, the parser, the agent builder, the intelligent agent configuration file (IACF), the state of the intelligent agent, e.g. in the form of an intelligent agent state file (IASF), the built functional IAs and optionally a user interface and a supporting deployment infrastructure, as the Intelligent Agent Framework (IAF).

Using the IAF, a functional intelligent agent may be generated from an IACF expressed in the IACL. This may simplify the process of developing intelligent agents. More specifically, by the intelligent agent being constructed on the basis of a configuration file and by the intelligent agent allowing its state to be obtained from the intelligent agent, the intelligent agent may be reconstructed (copied) while maintaining its obtained knowledge of the environment. Effectively, the configuration file and state file may capture all or most relevant aspects of the intelligent agent without needing the actual built software component. This may, for example, allow the intelligent agent to be 'rebuilt' on the basis of the configuration file, e.g. to adapt or copy the intelligent agent, while the state file may allow the rebuilt intelligent agent to incorporate all previously obtained knowledge of the environment. Accordingly, a stateful copy of the original intelligent agent may be obtained.

This may be a major benefit in many use-cases. For example, certain devices may need to be factory-tuned before deployment. An intelligent agent may tune the device with a commonly accepted tuning immediately after production in the factory. A stateful copy of this agent may then be created to further personalize the device's tuning to further local preferences once the device is in use.

In addition, explicability of intelligent agents is a common issue, as the internal components and their interdependencies may be quite complex. As a result, intelligent agents are often regarded as black box reasoning systems. Legislation is increasingly aware of the risks of unexplainable intelligent software and may require an increasing level of explicability in such software. By being able to obtain the state file from the intelligent agent, the state may be used to explain the agent's reasoning, but also for improving the intelligent agent during development, etc.

In general, the IAF may avoid or reduce the need for expert knowledge on the inner workings of the used intelligent agent technologies. One, several or many identical IAs may be constructed on the fly with minimal effort using a single IACF. One or more copies may be made of an existing IA, optionally using the original agent's obtained knowledge of the environment as a starting point for further interaction of the copied agent with the environment. Variations of an IA may be easily constructed. This may be especially useful during early development, for example when still deciding on which reasoning techniques and hyperparameter values to use. An IA built using the IAF may be transferred to another party as a resource (e.g. a document in a controlled format), basically making IAs a commodity to be shared, traded or bought. An IA built using the IAF may be transferred to another platform A on which it is currently deployed, to any other platform B (e.g. from cloud to embedded hardware), optionally incorporating knowledge on platform B that was obtained while running on platform A.

It is noted that the state may change over time, e.g. due to new learnings of the environment, so obtaining the state from the intelligent agent after deployment may yield different results at various points in time. This may be valuable to see how the agent is evolving over time, e.g. making different decisions over its lifetime. Accordingly, the intelligent agent may allow its state to be retrieved at any given moment after deployment. Here, the term 'after deployment' may refer to any point in time after building the intelligent agent, including but not limited to a point in time after a first interaction of the intelligent agent with the environment.

Optionally, the intelligent agent allows the configuration from which the intelligent agent was built to be obtained from the intelligent agent after deployment. The configuration may thus be obtained from the intelligent agent itself, for example in the specific form of the configuration file or in another form indicating the configuration. This way, the configuration is made more persistent. Namely, for an agent which has already been deployed, perhaps for a long time, the original configuration file may have been lost or may be difficult retrieve, e.g. from the original development environment. In this aspect of the invention, the configuration may still be obtained from the intelligent agent itself.

Optionally, the intelligent agent is configured to output the state and/or the configuration. The intelligent agent may be built to be able to autonomously output the state and/or the configuration. For example, the intelligent agent may output both in the form of a state file which includes both the state and the configuration defined in the original configuration file.

Optionally, the intelligent agent is built to allow a reverse parser to retrieve the state and/or the configuration from the intelligent agent. This represents an addition or alternative to the intelligent agent being configured to autonomously output the state and/or the configuration.

Optionally, the data interface is further configured to access specification data providing a specification of the intelligent agent configuration language. By having the specification data available, various other optional aspects may be enabled, including but not limited to the parser component being further configured to validate the configuration file against the specification of the intelligent agent configuration language, and/or the system further comprising a user interface for enabling a user to specify the configuration file using the specification of the intelligent agent configuration language.

Optionally, the state as obtained from the intelligent agent is expressed in the intelligent agent configuration language. This may for example allow the state to be readily parsed or re-used by other entities which have access to the specification of the intelligent agent configuration language.

Optionally, the build component is further configured for, based on a target platform of the intelligent agent, selecting a different building block, or a different parameter, or a different parameter value, for a building block, to establish a part of the structure of the intelligent agent. The configuration file may provide a high-level specification of the structure of the intelligent agent, namely by defining configuration elements which each specify a part of a structure of the intelligent agent and one or more parameters. Depending on the target platform of the intelligent agent, different building blocks may be used to embody the desired parts of the structure. For example, for an embedded target platform having limited computing resources, building blocks may be used which are less computationally intensive yet which provide a same or similar function as the building blocks which would be used for a cloud-based target platform.

It will be appreciated by those skilled in the art that two or more of the above-mentioned embodiments, implementations, and/or optional aspects of the invention may be combined in any way deemed useful.

Modifications and variations of any computer-implemented method and/or any computer program product, which correspond to the described modifications and variations of a corresponding system, can be carried out by a person skilled in the art on the basis of the present description.

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows an overview of an intelligent agent framework in which an intelligent agent is built which is configured to output a state file which includes the intelligent agent's state and the contents of the configuration file;
Fig. 2 shows an overview of an intelligent agent framework in which a reverse parser is used to obtain the state file from the intelligent agent;
Fig. 3 illustrates deployment of an intelligent agent framework as a cloud web service, on which multiple functional intelligent agents may be executed;
Fig. 4 shows an exemplary processor system for building a software-based intelligent agent using aspects of the intelligent agent framework;
Fig. 5 shows a computer-implemented method of building a software-based intelligent agent using aspects of the intelligent agent framework; and
Fig. 6 shows a computer-readable medium comprising data.

It should be noted that the figures are purely diagrammatic and not drawn to scale. In the figures, elements which correspond to elements already described may have the same reference numerals.

### List of abbreviations

- AI: artificial intelligence
- API: application program interface
- IA: intelligent agent
- IAF: intelligent agent framework
- IACL: intelligent agent configuration language
- IACF: intelligent agent configuration file
- IASF: intelligent agent state file
- RL: reinforcement learning
- UI: user interface

### List of reference numbers

The following list of reference numbers is provided for facilitating the interpretation of the drawings and shall not be construed as limiting the claims.
- 100: intelligent agent configuration file
- 110: specification data, intelligent agent configuration language
- 120: library data, internal intelligent agent building blocks
- 130: library data, 3^{rd} party intelligent agent building blocks

- 150: user interface
- 160: parser, parse component
- 170: agent builder, build component
- 180: reverse parser

- 200: functional intelligent agent
- 210: intelligent agent state file

- 300: service gateway
- 310: application program interface
- 320: software libraries
- 330: artificial intelligence micro services
- 340: supporting micro services
- 350: stream-processing software service

- 400: system for building a software-based intelligent agent
- 410: data interface
- 420: storage containing software framework
- 430: processor subsystem

- 500: method for building a software-based intelligent agent
- 510: accessing configuration file
- 520: parsing configuration file
- 530: building intelligent agent
- 540: accessing software libraries
- 550: selecting set of building blocks and setting parameter values
- 600: computer-readable medium
- 610: non-transitory data

### DETAILED DESCRIPTION OF EMBODIMENTS

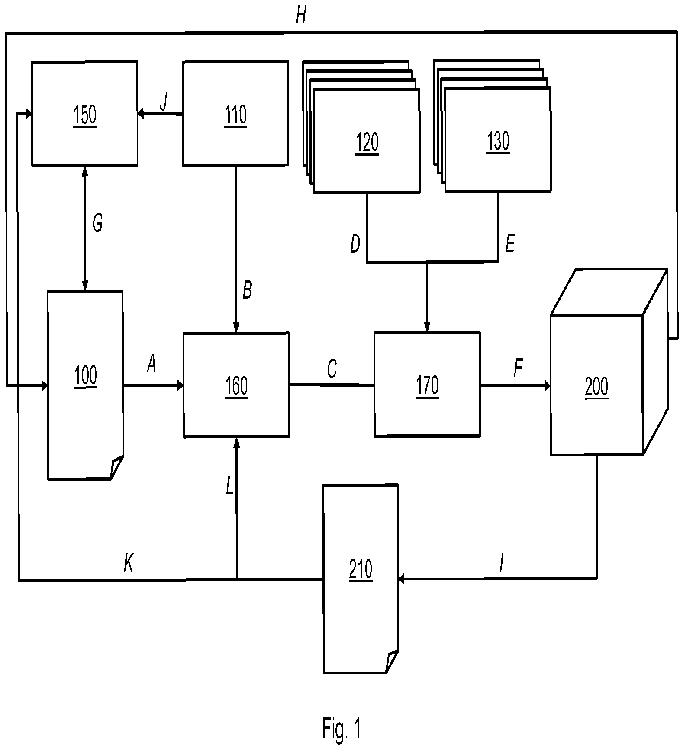

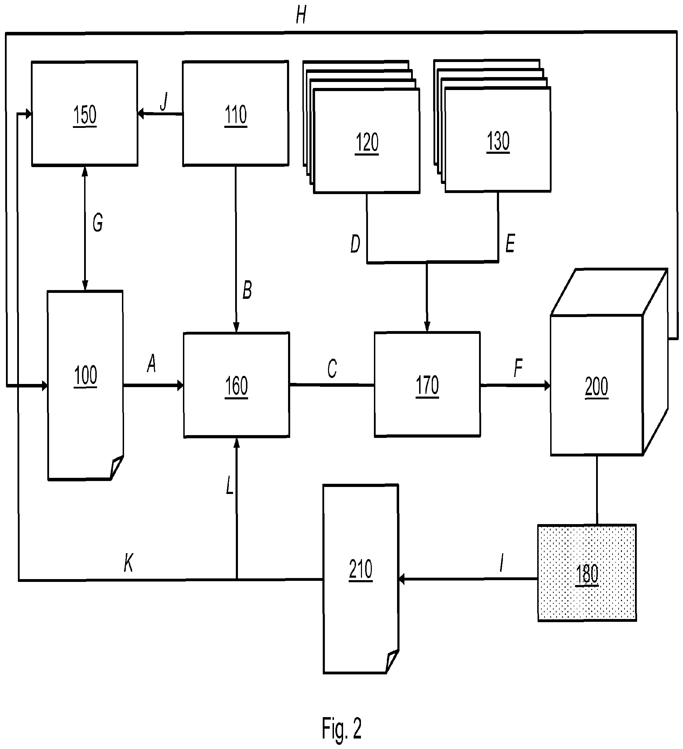

The following describes, with reference to Fig. 1, an intelligent agent framework in which an intelligent agent is built which is configured to output a state file which includes the intelligent agent's state and the contents of the configuration file, and with reference to Fig. 2, an intelligent agent framework in which a reverse parser is used to obtain the state file from the intelligent agent. Any reference numbers refer to those of Figs. 1 and 2, unless otherwise noted.

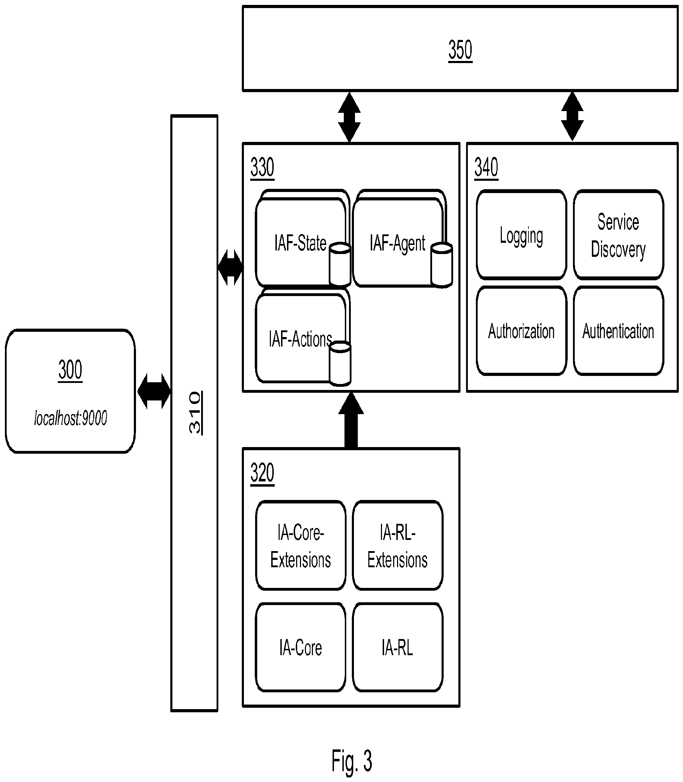

In general, the intelligent agent framework (IAF) may comprise several components: a specification of an intelligent agent configuration language (IACL), e.g. in the form of specification data 110, an IACL parser 160, a collection of internal and 3rd party re-usable intelligent agent building blocks 120, 130, an agent builder 170, an intelligent agent configuration file (IACF) 100, an intelligent agent state file (IASF) 210, a functional IA 200 created by the IAF, and optionally a user interface 150 and supporting deployment infrastructure. The dependencies between these components are shown in Figs. 1 and 2 and are further discussed in the following. The deployment infrastructure is discussed separately with reference to Fig. 3.

### Intelligent Agent Configuration Language

The intelligent agent configuration language may provide a formal and structured way of specifying how an agent is constructed. This may be achieved by splitting the intelligent agent's specification up in several configuration elements. In general, each configuration element may describe a specific part of the agent's structure using a set of parameters that may (need to) be defined by the intelligent agent's designer. The parameters set by the agent's designer are specific to the use-case for which the agent is constructed. Hence, configuration elements specify how an agent for a specific use-case should be constructed. These configuration elements may specify, but are not limited to, one of the following AI concepts for the agent's intended use-case: state space, action space, algorithm, action function, reward function, policy, etc.

Some configuration elements may relate to fundamental concepts of the artificial intelligence field (e.g. state space and action space). Other configuration elements may relate to a specific technology to implement intelligent agents. For example, a configuration element named 'qFunction' may be provided specifically for implementing intelligent agents using reinforcement learning techniques.

Depending on the technique(s) used for implementing the agent, a different set of configuration elements may be used and may be specified in the IACF. It may be desirable for the IACL to define an extensive range of configuration elements to support a broad range of agent configurations. This may provide flexibility over time, as an IACL may evolve and improve over time, for example, to support more agent use-cases and technologies (e.g. expanding the range of available configuration elements, or improving existing configuration elements). For example, the IACL might be expanded to include a "search" configuration element to support a variety of search algorithms.

The IACL is sufficiently eloquent to create agents for a broad range of use-cases and correspondingly required AI technologies. Simultaneously, the IACL shouldn't become too verbose, as this directly undermines the benefit of having an IACL in the first place. This eloquence is the direct result of a non-trivial design and engineering effort in which the IACL strikes an optimal balance between 1) maximizing the range of supported AI technologies by providing corresponding configuration elements 2) minimizing the verbosity of the IACL and 3) maximizing the level of detail in which a use-case can be expressed in the configuration elements.

### Intelligent Agent Configuration File

An intelligent agent configuration file (IACF) may contain a combination of all configuration elements for a specific use-case. An IACF may need to comply with the IACL's specification of allowed and correct configuration elements.

An example of an IACF may be the following, in which as configuration elements the state space, the action space, an action function, a reward function, a qFunction, a policy and an algorithm are defined using user-defined values for the parameters belonging to each configuration element:

| |
|---|
| { |
| "stateSpace":{ |
| "elements": [ |
| { |
| "name": "location" , |
| "initialValue": "home" , |
| "initialValueType": "string" |
| }, |
| { |
| "name": "temperature", |
| "initialValue": "21", |
| "initialValueType":"int" |
| } |
| ] |
| }, |
| "actionSpace" : { |
| "actions": [ |
| { |
| "name":"travel" |
| }, |
| { |
| "name" : "relax" |
| }, |
| { |
| "name" : "nonAction" |
| } |
| ] |
| }, |
| "actionFunction":{ |
| "type" : "bahamas", |
| "url" :"webhook.microservice.com/root" |
| }, |
| "rewardFunction":{ |
| "type":"bahamas", |
| "url":"webhook.microservice.com/root/" |
| }, |
| "qFunction" : { |
| "type" : "tableBased" |
| }, |
| "policy":{ |
| "type": "epsilonGreedy", |
| "epsilon":0.25 |
| }, |
| "algorithm": { |
| "type": "qLearning", |
| "alpha":0.1, |
| "gamma":0.9 |
| } |
| } |

The above example illustrates how a basic intelligent agent may be specified in a few lines of text using the IACL, eliminating the need for writing IA code. The state space and action space configuration elements may be standard configuration elements, e.g., of each IACF. Each configuration element other than the state space and the action space may accept a type definition. For example, the algorithm element may be defined to be of type "qLearning", which may refer to a specific reinforcement learning algorithm to be used as a reasoning component of the agent. Depending on the type of the algorithm, several additional parameters unique to the algorithm type may be defined, such as the 'alpha' and 'gamma' parameters for Q-Learning. The same applies for other configuration elements. As a result, the IACF may allow a detailed specification without becoming too verbose.

### Parser

The parser 160 may be a software component that accepts an IACF 100 expressed according to the IACL's specification. The parser 160 may validate whether the IACF 100 is correct and complete using the IACL specification 110 via process (B). Additionally, the parser 160 may create an internal representation of how the agent should be constructed from this configuration file 100 via process (A). This internal representation may be a data representation of a desired structure of the intelligent agent on the basis of the set of configuration elements and their parameters. In a specific example, the data representation may be a data structure defining the structure of the agent in a manner which is readable by the agent builder 170. This internal representation may for example resemble the terminology and concepts used in the building instructions that may be generated by the agent builder 170 for construction of the intelligent agent in the next step.

### Libraries / Building Blocks

To construct the intelligent agent from the configuration file, or more specifically from the internal representation constructed by the parser 160, a collection of software libraries 120, 130 may be accessed. These software libraries may include internal libraries 120, e.g. internal to the development organization, but also external '3^{rd} party' libraries 130. Together, these libraries 120, 130 may provide the re-usable building blocks from which intelligent agents may be built, in the sense that only parameters may need to be provided to make these generic building blocks functional (e.g. the aforementioned alpha and gamma parameters for Q-Learning).

### Agent Builder

The internal representation of the parsed configuration file and the generic building blocks may be used by the agent builder 170 via processes (C, D, E) to create a functional intelligent agent 200 via process (F). The agent builder may be a software component, e.g. a build component, which may translate the parsed configuration to a set of software instructions, expressed by using the building blocks 120, 130, and thereby may construct an intelligent agent as specified by the IACF 100. For example, the configuration element 'stateSpace' may correspond to a generic and re-usable 'StateSpace' class (i.e. a building block). The StateSpace class may accept use-case specific parameters to be created and subsequently used by a functional intelligent agent. These parameters may be specified in the IACF 100 as user-defined parameters of a respective configuration element. The building blocks 120, 130 themselves may be generic, but the use-case information of the parsed configuration file (e.g. the user-defined parameters) may complete a building block to make the building block functional and use-case specific.

In summary, the configuration elements that collectively form the intelligent agent's configuration file 100 are transformed to software instructions by the parser 160 and agent builder 170 to construct the agent as specified. These software instructions use a selection of the re-usable and use-case agnostic building blocks 120, 130. The software instructions instantiate these building blocks using the parameters set in the configuration elements to make them use-case specific. By doing so, a functional intelligent agent 200 is obtained. Hence, there is a direct relation between a configuration element and a building block, which is represented in the agent builder. In other words, the agent builder knows how to translate a configuration element with corresponding parameters to an instantiated building block for a specific agent and use-case. This relation can be one-to-one, as illustrated for the previously mentioned 'stateSpace' configuration element, but may be far less straightforward in other cases (e.g. for a Q-Function).

A functional intelligent agent 200 created by the IAF may provide the original configuration file 100 from which it was created via process (**H**), or in general any other data representation of the intelligent agent's configuration. As a result, new intelligent agents with an identical structure may be created on the basis of the configuration file 100 with minimal effort using the previously described processes. These copied intelligent agents may be identical in structure (e.g. building blocks) compared to the original agent. It is noted that this results in a **stateless** copy: the building blocks of the agent may be copied (e.g. with identical or changed building block parameters, e.g. gamma of Q-Learning), but the obtained knowledge of the environment of the original agent are not transferred. This may provide an effective way of creating new iterations of intelligent agents during the development process and testing the performance among a large variation of agent configurations (e.g. hyperparameter optimization). Alternatively, a **stateful** copy may be created, as elucidated further onwards.

### User Interface

A user interface (UI) 150, such as a graphical user interface, may be provided to more easily generate agent configuration files 100 using the IACL specification via dataflows (**G, J**). This may be valuable for novice users that are not familiar with (all of) the configuration options, or simply for an expert's ease of use with the system. The user interface 150 may provide a structured graphical workflow that may guide the user through the process of defining an intelligent agent. Parameters may be set with default values to simplify the process. Alternatively, the user may choose an advanced configuration mode that may allow for every parameter to be set explicitly. The UI 150 may generate configuration files from the ground up, but it may also load previously created configuration files for modification.

The UI 150 may play a role in other scenarios as well, such as conducting tests for validating or optimizing agent performance. In such a scenario, the UI may generate a range of agent configuration files 100 (e.g. with varying hyperparameters), let the other components (e.g. parser 160, agent builder 170) generate the functional agents 200 from the configuration files 100, and perform tests and conclude with a detailed report on the agents' performances.

### Intelligent Agent State File

A functional intelligent agent 200, when created by the IAF, may autonomously provide its current state, for example by outputting an intelligent agent state file (IASF) 210 via process **(I).**

This IASF 210 may be expressed conforming to the IACL specification. The IACL is sufficiently eloquent to express the state of an existing agent. This eloquence is the direct result of a non-trivial design and engineering effort in which the IACL strikes an optimal balance between 1) maximizing the range of supported AI technologies (and their corresponding state) 2) minimizing the verbosity of the IACL and 3) maximizing the level of detail in which state can be expressed.

The state file 210 may provide the internal state of all of the intelligent agent's components. In addition, the state file 210 may provide a comprehensive description of what has happened with the intelligent agent 200 so far: learnings of the agent, measurements observed from the environment, actions performed, received rewards, etc. The state file 210 may further include the configuration defined in configuration file 100. Hence, the IASF 210 may be considered as an extended IACF. In some embodiments, the intelligent agent 200 may output the IASF 210 instead of separately outputting the IACF 100 (or another data representation of the intelligent agent's configuration) and a data representation of the agent's state. In other embodiments, the intelligent agent may separately output the IACF 100 (or another data representation of the intelligent agent's configuration) and the data representation of the agent's state instead of the IASF 210.

In addition or as an alternative to the intelligent agent 200 outputting the state and/or the configuration, an external reverse parser 180 may be used to obtain the state and/or the configuration, as also shown in **Fig. 2****.** In this implementation, the reverse parser 180 may inspect and analyze a functional intelligent agent created by the IAF to extract an internal representation of the intelligent agent and to subsequently obtain its state. The reverse parser 180 may then generate a corresponding state file, such as the IASF 210 or a separate configuration file and a file-based description of the state. For that purpose, the reverse parser 180 may be provided with the knowledge that a functional intelligent agent may be expressed by terminology and concepts of the IACL 110.

The state file may also be used to create a **'stateful'** copy of the intelligent agent 200, e.g. via process **(L).** In contrast to process **H,** process **L** may create a copy of the intelligent agent that includes the intelligent agent's learnings of the environment so far, or in general, that possesses all of the information of the original agent. Accordingly, the copied intelligent agent may immediately exploit the knowledge of the original agent when starting to interact with the environment.

The state file may also be used for manual inspection by an expert using the aforementioned user interface 150 via processes **(K, J).** For example, based on the state file and the specification of the intelligent agent configuration language, the user interface 150 may visualize what is happening inside the intelligent agent and clarify why specific actions were chosen by the agent.

An example of an IASF 210 may be the following:

| |
|---|
| { |
| "previousState": { |
| "observations": [ |
| { |
| "name": "location", |
| "value": "bahamas", |
| "valueType": "string", |
| "dateLogged": 1508848851002 |
| }, |
| { |
| "name": "temperature", |
| "value": "21", |
| "valueType": "int", |
| "dateLogged": 1531835375812 |
| } |
| ] |
| }, |
| "performedAction": { |
| "name" : "relax" |
| }, |
| "stateSpace": { |
| "elements": [ |
| { |
| "name": "location", |
| "initialValue" : "home", |
| "initialValueType": "string" |
| }, |
| { |
| "name": "temperature", |
| "initialValue": "21", |
| "initialValueType" : "int" |
| } |
| ] |
| }, |
| "actionSpace": { |
| "actions": [ |
| { |
| "name": "travel" |
| }, |
| { |
| "name": "relax" |
| }, |
| { |
| "name": "nonAction" |
| } |
| ] |
| }, |
| "actionFunction": { |
| "type": "bahamasActionFunction" |
| }, |
| "rewardFunction": { |
| "type": "bahamasRewardFunction" |
| }, |
| "qFunction": { |
| "entries": [ |
| { |
| "key": [ |
| "action: nonAction", |
| location: home" |
| "temperature: 21" |
| ], |
| "utility": 0 |
| }, |
| { |
| "key": [ |
| "action: travel" , |
| "location:home", |
| "temperature: 21" |
| ], |
| "utility": 42.246469003239724 |
| }, |
| { |
| "key": [ |
| "action:relax", |
| "location:bahamas", |
| "temperature: 21" |
| ], |
| "utility": 30.355895494017837 |
| }, |
| { |
| "key": [ |
| "action: travel", |
| "location:bahamas", |
| "temperature: 21" |
| ], |
| "utility": 7.424361391896902 |
| } |
| ], |
| "type": "tabularQFunction" |
| }, |
| "policy": { |
| "epsilon": 0.25, |
| "type": "epsilonGreedyPolicy" |
| }, |
| "algorithm": { |
| "alpha": 0.1, |
| "gamma": 0.9, |
| "type": "qLearningAlgorithm" |
| } |
| } |

Using this state file, one may observe that the intelligent agent currently thinks it is located in the Bahamas with a temperature of 21 degrees. Using the Q-function's state, one may conclude that the agent thinks it's best to relax in the Bahamas, instead of traveling back home. By doing so, the agent expects a cumulative reward of about 30. Should the agent be located at home, the best action would be to travel to the Bahamas, with an expected cumulative reward of about 42.

**Fig. 3** illustrates a deployment of an intelligent agent framework as a cloud web service (IAF-Cloud), on which many intelligent agents may be executed.

Also discussed are an embedded deployment (IAF-Embedded) and a mobile deployment (IAF-Mobile). These deployments illustrate the IAF's functionalities in different hardware and software environments (also simply referred to as 'platforms').

### IAF - Cloud

The IAF may be deployed as a cloud service in order to provide configurable intelligent agent technology at scale for various use-cases. An exemplary high-level overview of how such a web stack may be constructed is shown in Fig. 3. The previously discussed main components of the IAF may be encapsulated in several AI micro-services 330, as indicated in Fig. 3. The micro-services 330 may enhance the IAF's main components with functionalities such as concurrently running multiple agents on one machine and agent lifecycle management. A selection of the micro-services' functionalities may be exposed by a web API 310. Hence, agents may be initiated in the cloud by sending an IACF using the API 310 via a service gateway 300. The cloud service may provide all the necessary infrastructure for running the intelligent agent, thereby removing this complexity from the user's concerns when creating and running intelligent agents.

Supporting micro-services 340, which are not specifically IA related, may be provided for security and maintenance, as indicated in Fig. 3. A message bus may be provided by a stream-processing software service 350, such as Kafka, to provide scalable messaging between the micro-services 330, 340. Software libraries 320 may be provided to serve as building blocks for the intelligent agents.

There may be several advantages of the IAF-Cloud deployment. For example, by specifically selecting technologies known for their scalability, such as Kafka, Cassandra and a micro-service architecture, the intelligent agents constructed using the aforementioned IA libraries may scale to any number of end-users. Second, by encapsulating the IAF's main components in a web service, the agent design process may be further abstracted, because the end-user may only need to interact with the API and IACL to convey the IA to be implemented.

### IAF - Embedded

The proposed intelligent agent framework may also be realized for embedded hardware. Using the same IACL, a specific agent builder may be implemented that is capable of translating agent configuration files to intelligent agents running on embedded hardware. An embedded environment has significantly more limited compute and memory capabilities compared to a cloud environment. The agent builder for the embedded environment may thus produce agents with these restrictions in mind, by, for example, favoring less demanding reasoning techniques or not allowing the use of compute intensive algorithms at all. The advantage of embedded intelligent agents may be that they may be provided on devices that do not have cloud connectivity, while also running on relatively inexpensive hardware. Additionally, because the agent runs locally, it may react more quickly on changes in the environment compared to an agent in the cloud.

### IAF - Mobile

Similarly, the IAF may also be used for mobile devices, where the same IACL may be used to generate intelligent agents on mobile phone platforms (e.g. Android, iOS). The mobile environment may be less restrictive in compute and memory than the embedded environment, but it is typically more restrictive than the cloud environment. Similar to the embedded environment, a specific agent builder may be implemented for this mobile environment, e.g. taking the limitation of the mobile hardware into account when constructing the intelligent agents.

### IACL across different platforms

The perceived value of the IACL may increase when considering the different platforms on which the intelligent agents may be deployed. More specifically, by using an identical IACL for the deployment of the IAF on different platforms, the specifics of implementing an agent from a configuration file may be left to the agent builder of each corresponding platform. By doing so, the same IACF may be used to configure identical agents on different deployment environments. This may provide several benefits. First of all, cross-platform agent development may be made easier. For example, an embedded agent may be developed by testing many agent configurations on IAF-Cloud. IAF-Cloud may allow for fast and large-scale testing, in contrast to IAF-Embedded. Once the AI expert has narrowed in on a specific configuration that fits the requirements of the use-case, the optimal configuration may then be transferred, e.g. as a configuration file, to the embedded agent builder to create that specific agent in the embedded environment. This means that embedded agent development may be performed outside of the embedded hardware environment, allowing a more efficient development process. Another advantage may be that compute intensive agents may initially be trained in the cloud environment, and subsequently transferred to the embedded environment. By doing so, previous learnings obtained in the cloud, which may be difficult to attain on embedded hardware, may now also be available to the embedded agent.

### General

The intelligent agent framework may be used for intelligent agents in any application area (e.g. health, financial, entertainment). Additionally, the intelligent agent framework may be used for research purposes, e.g. for validation of new intelligent agent concepts, reasoning algorithms, sensors and actuators.

Any references to the 'configuration file' being obtainable from the intelligent agent are to be understood as referring to the configuration as specified in the configuration file being obtainable from the intelligent agent.

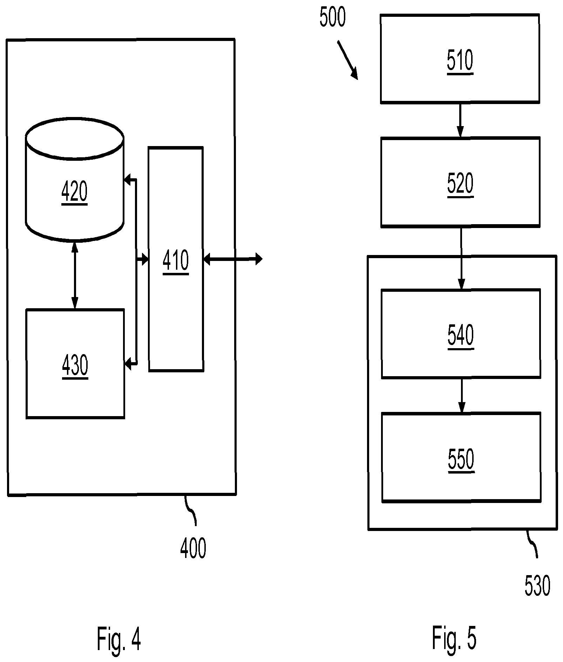

**Fig. 4** shows an exemplary processor system 400 which may implement a system for building a software-based intelligent agent. Fig. 4 shows the system 400 to comprise a data interface 410 for accessing a configuration file. The interface 410 may be an external interface and take any suitable form, including but not limited to a network interface such as a wired network interface based on Ethernet or optical fiber or a wireless network interface. In some embodiments, the interface 410 may be an internal interface, e.g. to another part of the system 400. The data interface 410 may also be used to access other types of data, e.g., data containing a specification of an intelligent agent configuration language.

Fig. 4 further shows the system 400 comprising a storage 420 comprising a software framework for building the software-based intelligent agent. The storage may, for example, be persistent (bulk) storage such as hard disk, a solid-state drive, or an array thereof, or a non-persistent storage such as a memory.

The system 400 may further comprise a processor subsystem 430 which may be configured, e.g. by hardware design or software, to perform the operations described with reference to Fig. 1-3 in as far as pertaining to the building of the software-based intelligent agent using the software framework. For example, the processor subsystem 430 may be embodied by a single Central Processing Unit (CPU), but also by a combination or system of such CPUs and/or other types of processing units. In general, the system 400 may be embodied by a (single) device or apparatus but also by a distributed system of such devices or apparatuses. The aforementioned device or apparatus may comprise one or more (micro)processors which execute appropriate software. Software implementing the functionality of the function(s) may have been downloaded and/or stored in a corresponding memory or memories, e.g. in volatile memory such as RAM or in non-volatile memory such as Flash. Alternatively, the function(s) may be implemented in the device or apparatus in the form of programmable logic, e.g. as a Field-Programmable Gate Array (FPGA). In general, each function may be implemented as a circuit.

**Fig. 5** shows a block-diagram of a computer-implemented method 500 for building a software-based intelligent agent. The method 500 may comprise, in an operation titled "ACCESSING CONFIGURATION FILE", accessing 510 a configuration file defining a configuration of an intelligent agent in accordance with an intelligent agent configuration language. The method 500 may further comprise, in an operation titled "PARSING CONFIGURATION FILE", parsing 520 the configuration file and creating a data representation of a structure of the intelligent agent on the basis of the set of configuration elements and their parameters. The method 500 may further comprise, in an operation titled "BUILDING INTELLIGENT AGENT", building 530 the software-based intelligent agent by, in an operation titled "ACCESSING SOFTWARE LIBRARIES", accessing 540 software libraries providing building blocks for the intelligent agent, and in an operation titled "SELECTING SET OF BUILDING BLOCKS AND SETTING PARAMETER VALUES", based on the data presentation provided by the parsing, selecting 550 a set of building blocks and setting their parameter values so as to establish the structure of the intelligent agent, wherein the intelligent agent allows a state of the intelligent agent to be obtained from the intelligent agent after deployment.

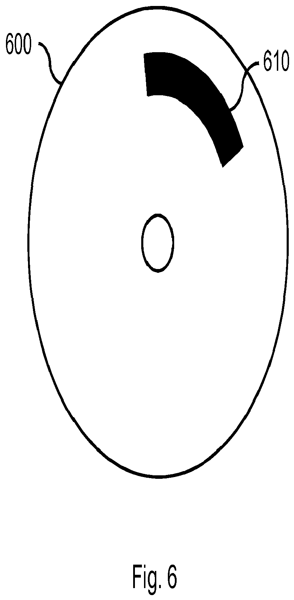

It will be appreciated that, in general, the operations of method 500 may be performed in any suitable order, e.g. consecutively, simultaneously, or a combination thereof, subject to, where applicable, a particular order being necessitated, e.g. by input/output relations. The method may be implemented on a computer as a computer implemented method, as dedicated hardware, or as a combination of both. As also illustrated in **Fig. 6****,** instructions for the computer, e.g. executable code, may be stored on a computer readable medium 600, e.g. in the form of a series 610 of machine readable physical marks and/or as a series of elements having different electrical, e.g. magnetic, or optical properties or values. The executable code may be stored in a transitory or non-transitory manner. Examples of computer readable mediums include memory devices, optical storage devices, integrated circuits, online software, etc. Fig. 6 shows an optical disc 600.

Additionally or alternatively, the computer readable medium 600 may comprise transitory or non-transitory data 610 representing a software framework as described in this specification. Additionally or alternatively, the computer readable medium 600 may comprise transitory or non-transitory data 610 representing an intelligent agent as described in this specification. Additionally or alternatively, the computer readable medium 600 may comprise transitory or non-transitory data 610 representing a configuration file and/or state file as described in this specification. Additionally or alternatively, the computer readable medium 600 may comprise a specification of an intelligent agent configuration language.

In accordance with an abstract of the present application, a software framework may be provided for building a software-based intelligent agent. A configuration file may be written in the format of a configuration language to specify how an agent is constructed, for example by specifying a set of configuration elements and their parameters. To build the intelligent agent, the configuration file may be parsed to create an internal representation of how the agent is structured, e.g., a data structure which defines the structure of the agent and which is readable by an agent builder. This internal representation may be used by the agent builder to create a functional intelligent agent, e.g. one that is executable on a particular target platform. The built intelligent agent may allow its state to be retrieved, for example by the intelligent agent being capable of autonomously outputting a state file. The configuration file together with the description of the intelligent agent's state may allow a 'stateful' copy of the intelligent agent to be created.

Examples, embodiments or optional features, whether indicated as nonlimiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A system (400) for building a software-based intelligent agent, the system comprising:
- a data interface (410) for accessing:
- a configuration file (100) defining a configuration of an intelligent agent in accordance with an intelligent agent configuration language (110),
wherein the intelligent agent configuration language defines configuration elements which each specify a part of a structure of the intelligent agent using one or more parameters which are at least in part user-definable,
wherein the configuration file specifies a set of configuration elements and their parameters in accordance with the intelligent agent configuration language;
- a storage (420) comprising a software framework for building the software-based intelligent agent, the software framework comprising:
- a parse component (160) for parsing the configuration file and creating a data representation of a structure of the intelligent agent on the basis of the set of configuration elements and their parameters;
- a build component (170) for building the software-based intelligent agent by i) accessing software libraries (120, 130) providing building blocks for the intelligent agent, and ii) based on the data presentation provided by the parse component, selecting a set of building blocks and setting their parameter values so as to establish the structure of the intelligent agent;
- a processor subsystem (430) for communicating with the data interface and the storage and for executing the software framework to build the intelligent agent (200) based on the configuration file, wherein the intelligent agent allows a state (210) of the intelligent agent to be obtained from the intelligent agent after deployment.

2. The system (400) according to claim 1, wherein the intelligent agent (200) allows the configuration (100) from which the intelligent agent was built to be obtained from the intelligent agent after deployment.

3. The system (400) according to claim 2, wherein the intelligent agent (200) is configured to output the state (210) and/or the configuration (100).

4. The system (400) according to claim 2, wherein the intelligent agent (200) is built to allow a reverse parser (180) to retrieve the state (210) and/or the configuration (100) from the intelligent agent.

5. The system (400) according to any one of claims 1 to 4, wherein the data interface (410) is further configured to access specification data (150) providing a specification of the intelligent agent configuration language (110).

6. The system (400) according to claim 5, wherein the parser component (160) is further configured to validate the configuration file (100) against the specification of the intelligent agent configuration language (110).

7. The system (400) according to claim 5 or 6, further comprising a user interface (150) for enabling a user to specify the configuration file (100) using the specification of the intelligent agent configuration language (110).

8. The system (400) according to any one of the above claims, wherein the build component (170) is further configured for, based on a target platform of the intelligent agent, selecting a different building block (120, 130), or a different parameter, or a different parameter value, for a building block, to establish a part of the structure of the intelligent agent (200).

9. A computer-readable medium (600) comprising transitory or non-transitory data (610) representing a software framework according to any one of claims 1 to 8.

10. A computer-readable medium (600) comprising transitory or non-transitory data (610) representing an intelligent agent (200) as built by the system (400) according to any one of claims 1 to 8, wherein the intelligent agent allows the state (210) of the intelligent agent to be obtained from the intelligent agent after deployment.

11. The computer-readable medium (600) according to claim 10, wherein the intelligent agent (200) allows the configuration (100) from which the intelligent agent was built to be obtained from the intelligent agent after deployment.

12. A computer-readable medium (600) comprising transitory or non-transitory data (610) representing at least one of:
- a configuration file (100) defining a configuration of an intelligent agent in accordance with an intelligent agent configuration language,
the intelligent agent configuration language defining configuration elements which each specify a part of a structure of the intelligent agent using one or more parameters which are at least in part user-definable, and
the configuration file specifying a set of configuration elements and their parameters in accordance with the intelligent agent configuration language;
- a state file (210) comprising a state of the intelligent agent; and
- a state file (210) comprising the configuration of the intelligent agent as the set of configuration elements and their parameters in accordance with the intelligent agent configuration language and the state of the intelligent agent.

13. A computer-readable medium (600) comprising transitory or non-transitory data (610) representing a specification of an intelligent agent configuration language (110), wherein the intelligent agent configuration language defines configuration elements which each specify a part of a structure of an intelligent agent using one or more parameters which are at least in part user-definable.

14. A computer-implemented method (500) of building a software-based intelligent agent, the method comprising:
- accessing (510) a configuration file defining a configuration of an intelligent agent in accordance with an intelligent agent configuration language,
wherein the intelligent agent configuration language defines configuration elements which each specify a part of a structure of the intelligent agent using one or more parameters which are at least in part user-definable,
wherein the configuration file specifies a set of configuration elements and their parameters in accordance with the intelligent agent configuration language;
- parsing (520) the configuration file and creating a data representation of a structure of the intelligent agent on the basis of the set of configuration elements and their parameters;
- building (530) the software-based intelligent agent by:
- accessing (540) software libraries providing building blocks for the intelligent agent, and
- based on the data presentation provided by the parsing, selecting (550) a set of building blocks and setting their parameter values so as to establish the structure of the intelligent agent;
wherein the intelligent agent allows a state of the intelligent agent to be obtained from the intelligent agent after deployment.

15. A computer-readable medium (600) comprising transitory or non-transitory data (610) representing instructions arranged to cause a processor system to perform the computer-implemented method according to claim 14.
